**Europäisches Patentamt**

**European Patent Office**

**Office européen des brevets**

(11) Veröffentlichungsnummer: **0 199 912
B1**

(12) **EUROPÄISCHE PATENTSCHRIFT**

(45) Veröffentlichungstag der Patentschrift:
31.01.90

(21) Anmeldenummer: **86101934.7**

(22) Anmeldetag: **15.02.86**

(51) Int. Cl.⁴: **C 01 B 25/32**

(54) Verfahren zur Herstellung von grobkörnigem Dicalciumphosphat-Dihydrat.

(30) Priorität: **02.05.85 DE 3515695**

(43) Veröffentlichungstag der Anmeldung:
**05.11.86 Patentblatt 86/45**

(45) Bekanntmachung des Hinweises auf die Patenterteilung:
**31.01.90 Patentblatt 90/5**

(84) Benannte Vertragsstaaten:
**AT BE CH DE FR GB IT LI LU NL SE**

(56) Entgegenhaltungen:
**FR-A- 1 411 979
US-A- 3 488 145
US-A- 4 166 839**

**CHEMICAL ABSTRACTS, Band 88, Nr. 26, 20. Juni 1978,
Seite 164, Zusammenfassung Nr. 193914z, Columbus,
Ohio, US; & SU-A-597 663 ("KHIMPROM" SLAVYANSK
INDUSTRIAL ENTERPRISES) 15-03-1978**

**Die Akte enthält technische Angaben, die nach dem
Eingang der Anmeldung eingereicht wurden und die
nicht in dieser Patentschrift enthalten sind.**

(73) Patentinhaber: **Benckiser-Knapsack GmbH, Dr.
Albert-Reimann-Strasse 2, D-6802 Ladenburg (DE)**

(72) Erfinder: **Brachtel, Gerold, Dr. Dipl.-Chem.,
Reisacher-Strasse 4, D-6800 Mannheim 61 (DE)**
Erfinder: **Raab, Günter, Lortzingerstrasse 1,
D-6937 Laudenbach (DE)**
Erfinder: **Schober, Detlev, Eppsteiner-Strasse 33,
D-6710 Frankenthal (DE)**

(74) Vertreter: **Grussdorf, Jürgen, Dr. et al, Patentanwälte
Zellentin & Partner Rubensstrasse 30,
D-6700 Ludwigshafen (DE)**

## Beschreibung

Die Erfindung betrifft ein (semi-)kontinuierliches Verfahren zur Herstellung von grobkörnigem Dicalciummmonohydrogenphosphat-Dihydrat aus reiner Phosphorsäure und gefälltem Calciumcarbonat. Die durch Fällungsreaktionen hergestellten Produkte eignen sich nach entsprechender Trocknung im besonderen als Trägersubstanzen für die Direkttablettierung in der pharmazeutischen Industrie.

Die Direkttablettierung ist gegenüber konventionellen Tablettierverfahren dadurch gekennzeichnet, daß das Tablettiergemisch vor dem Verpressen keinem gesonderten Granulierprozeß z.B. einer Naß- oder Trockengranulierung unterworfen werden braucht, um haltbare, abriebfeste Tabletten herzustellen. Die Komponenten können vielmehr nach dem Mischen direkt verpreßt werden, woraus — abgesehen vom geringeren apparativen Aufwand — eine wesentliche Kosten- und Zeitersparnis resultiert.

Als Trägersubstanz für die Direkttablettierung dient in zunehmendem Maße Dicalciummmonohydrogenphosphat-Dihydrat (DCP-Dihydrat). Beispielsweise wird nach der US-PS 3 134 719 DCP-Dihydrat in unvermahlener, grobkörniger Struktur wirkungsvoll eingesetzt. Es hat sich nun gezeigt, daß es nicht alleine genügt, schlechthin unvermahlenes, grobkörniges DCP-Dihydrat zu verwenden, sondern daß es zwecks Optimierung und Reproduzierung der Preßdruck/Härte-Eigenschaften erstrebenswert ist, ein DCP-Dihydrat bestimmter Kornstruktur (Korngröße und Kristallform) einzusetzen. Bezüglich Krongröße hat sich der Korngrößenbereich zwischen 63 und 450 µm, bevorzugt zwischen 90 und 300 µm, als besonders geeignet erwiesen. Um optimales Fließverhalten zu erreichen, sollte die Kristallform nahezu rundlich (sphärisch) sein.

Erst die Übereinstimmung dieser beiden Kriterien schafft die wesentliche Voraussetzung zu einem für die Direkttablettierung geeigneten Produkt. Darüber hinaus ist natürlich die Einhaltung der Reinheitsforderungen (z.B. Schwermetallgehalt, Verunreinigungen) einschlägiger Pharmakopöen die conditio sine qua non.

Die vielerorts praktizierte Herstellung von DCP-Dihydrat erfolgt gemäß dem Stand der Technik nach an sich bekannten Methoden, z.B. durch Umsetzung von Natriumphosphat mit einer Calciumchloridlösung (vgl. Ullmanns Enzyklopädie der technischen Chemie, 4. Auflage, Bd. 18, S. 334, Weinheim 1979). Zumeist sind jedoch die so hergestellten Produkte so feinkristallin, daß sich eine Verwendung für die Direkttablettierung ausschließt. Unter günstigen Bedingungen kann das Feinkorn (< 75 µm) z.B. nach entsprechender Kompaktierung und Zerkleinerung gemäß der EP-B 54 333 zwar auch für Tablettierzwecke eingesetzt werden, jedoch ist dies mit zusätzlichen Verfahrensschritten und Kosten verbunden.

Aufgabe der vorliegenden Erfindung war es nun, ein Verfahren zur Herstellung von DCP-Dihydrat zu entwickeln, bei dem bereits bei der Fällungsreaktion reproduzierbar und in hoher Ausbeute die gewünschte Kornstruktur (nahezu sphärische Kristalle im Korngrößenbereich zwischen 90 und 300 µm) erhalten werden kann.

Diese Aufgabe wird gelöst durch ein kontinuierliches Verfahren zur Herstellung von grobkörnigem Dicalciumphosphat-Dihydrat mit nahezu sphärischer Kristallform in einem Korngrößenbereich zwischen 63 und 450 µm, bevorzugt zwischen 90 und 300 µm, durch Reaktion von reiner wäßriger Phosphorsäure mit wäßrigen Suspensionen von Fällkreiden, wobei man in einem geeigneten Mischorgan eine phosphorsaure DCP-Dihydrat-Suspension vorlegt (2,5 > pH > 4) und Calciumcarbonat-Suspension und Phosphorsäure gleichzeitig so zudosiert, daß ein pH-Bereich zwischen 2,5 und 4 und Temperaturen zwischen 10° und 60°C aufrechterhalten werden, wobei man kontinuierlich oder semi-kontinuierlich eine dem gebildeten Reaktionsprodukt entsprechende Menge der Suspension entnimmt und in bekannter Weise das DCP-Dihydrat abtrennt, wäscht und trocknet, wobei die verwendeten Fällkreiden Schüttdichten zwischen 400 und 700 g/l aufweisen.

Die Herstellung von DCP durch Umsetzung von Phosphorsäure und Calciumcarbonaten, diese in Form von Fällkreiden und/oder Naturkreiden ist lange bekannt und wird z.B. in den DE-A 2 512 099 oder 3 227 523 näher beschrieben. Stets werden unter den angegebenen Bedingungen z.T. carbonathaltige Endprodukte mit mehr oder weniger willkürlicher Kornverteilung und Kornstruktur erhalten. Eine reproduzierbare Herstellung von DCP-Dihydrat mit den geforderten Produkteigenschaften ist hierdurch nicht möglich.

Aus der FR-A 1 411 971 ist die Herstellung von Calciumphosphatdihydrat mit Korngrößen von vorzugsweise unter 40 µm bekannt, wobei die Reaktion sowohl diskontinuierlich als auch kontinuierlich geführt werden kann. Neben der Umsetzung von Phosphorsäure mit Calciumchlorid oder Calciumnitrat und einer geeigneten Base wird auch die Umsetzung mit Calciumcarbonat beschrieben. Calciumphosphat mit Korngrößen von über 40 µm läßt sich danach in Ausbeuten von 40-70% herstellen, wenn man Phosphorsäure mit Calciumcarbonat bei pH-Werten von 2-4 mit Calciumcarbonatsuspension teilweise umsetzt, die Reaktion unterbricht und mit Calciumchlorid oder Calciumnitrat und Alkali bei einem pH von 8-9 die Reaktion zu Ende führt. Diese Reaktionsführung erlaubt daher lediglich ein diskontinuierliches Verfahren und liefert Produkte, die 30-60% Feinkorn, d.h. Teilchen unter 40 µm enthalten.

In CA, 88 Nr. 26, 1978, Nr. 193914z wird die Umsetzung von Kalkpulver mit konzentrierter Phosphorsäure beschrieben, wobei zur Beschleunigung des Verfahrens und Reduktion der Monocalciumphosphatverunreinigung eine hochkonzentrierte Suspension von Dicalciumphosphat in Wasser zugegeben wird.

Für die Durchführung des erfindungsgemäßen Verfahrens ist eine sorgfältige Auswahl der eingesetzten Rohstoffe, insbesondere des Calciumcarbonats erforderlich. Es versteht sich von selbst, daß zur Herstellung von DCP-Dihydrat, welches Eingang in pharmazeutische Produkte findet, nur Rohstoffe entsprechender Reinheit verwendet werden können.

Hochwertige Phosphorsäure, wie sie erfindungsgemäß verwendet werden kann, wird nach bekannten Verfahren, z.B. über thermische Verfahren oder mittels Extraktionsverfahren gewonnen. Als Calciumcarbonatkomponenten stehen hinsichtlich Reinheit prinzipiell ausgesuchte Naturkreiden oder durch geeignete Fällprozesse aufgereinigte Fällkreiden zur Verfügung. Es hat sich jedoch gezeigt, daß Naturkreiden, vermutlich wegen ihres mineralischen Ursprungs, wesentlich träger mit Phosphorsäure reagieren als Fällkreiden. Der Reaktionsverlauf, d.h. die Kornbildungsgeschwindigkeit des DCP-Dihydrats wird hierdurch ungünstig und z.T. willkürlich beeinflußt. Um brauchbare Ergebnisse zu erhalten, werden daher erfindungsgemäß nur definierte Fällkreiden eingesetzt.

Besonderes Augenmerk muß bei der Verwendung von Fällkreiden auf deren Schüttdichte gelegt werden. Es hat sich gezeigt, daß bei Verwendung von Fällkreiden mit sehr niedrigen Schüttdichten (< 400 g/l) Produkte mit hohem Feinanteil (< 63 µm) erhalten werden, während umgekehrt bei Verwendung von Fällkreiden mit sehr hohen Schüttdichten (> 700 g/l) Produkte mit stark unstrukturierten Grobpartikeln erhalten werden. Erfindungsgemäß werden daher Fällkreiden mit Schüttdichten zwischen 400 und 700 g/l, bevorzugt zwischen 500 und 600 g/l eingesetzt.

Fällkreiden werden zweckmäßig in Form von wäßrigen Suspensionen eingesetzt. Die Konzentration wird so gewählt, daß bei Reaktion mit Phosphorsäure die entstandene DCP-Dihydratsuspension einen Feststoffgehalt von ca. 20 bis 40 Gew.-% aufweist. Eine zu hohe wie zu niedrige Feststoffkonzentration vermindert die Produktausbeute im gewünschten Körnungsbereich.

Um ein carbonatfreies Endprodukt zu erhalten, wird erfindungsgemäß Phosphorsäure bis zu 10% Überschuß im Vergleich zur Theorie eingesetzt, so daß die resultierende DCP-Dihydrat-Suspension stets einen pH-Wert < 4 aufweist. Bei stöchiometrischem Einsatz von $H_3PO_4$ resultieren höhere pH-Werte, wodurch nicht umgesetztes Carbonat im gefällten DCP-Dihydrat includiert wird, so daß die Endprodukte außerhalb des Spezifikationsbereiches üblicher Pharmakopöen liegen, somit für eine Direkttablettierung ausscheiden.

Um eine möglichst gleichmäßige und kontrollierbare $CO_2$-Abgabe des Carbonats bei der Fällungsreaktion zu erzielen, wird erfindungsgemäß in einem Reaktor mit möglichst großem Verhältnis von Oberfläche zu Volumen gearbeitet. Länglich gebaute Mischreaktoren mit horizontal gelagerter Rührwelle werden daher bevorzugt eingesetzt. Dieser Reaktortyp hat sich insbesondere bei der kontinuierlichen Reaktionsführung bewährt.

Bei Durchführung zahlreicher *Batchprozesse* hat sich nun gezeigt, daß es aufgrund der vorstehend beschriebenen Bedingungen nicht möglich ist, reproduzierbar ein grobkörniges DCP-Dihydrat mit einem Korngrößenbereich zwischen 63 und 450 µm herzustellen. Bei genauer Auswertung der Versuche fällt folgendes auf:
— einzelne Ansätze weisen aus nicht näher ersichtlichen Gründen einen überaus hohen Feinkornanteil (bis zu 100% < 125 µm; bis zu 40% < 63 µm) auf, so daß sie für eine Direkttablettierung geradezu unbrauchbar sind;
— die Korngrößenverteilung ist von Charge zu Charge willkürlichen Schwankungen unterworfen. Die hieraus resultierenden unterschiedlichen Schüttdichten und Rieseleigenschaften verlangen vom abnehmenden Tablettierbetrieb ein hohes Maß an Flexibilität;
— die Kornfraktion > 250 µm bleibt nahezu vollständig aus. Es resultieren vergleichsweise schlechte Preßdruck/Härte-Eigenschaften des DCP-Dihydrats.

Offenbar liegen bei den einzelnen Batchprozessen unterschiedliche Keimbildungs- und Wachstumsbedingungen vor, die sich angesichts der Heterogenität der Gesamtreaktion «fest (Calciumcarbonat) - flüssig (wäßrige Phosphorsäure) - gasförmig (Kohlendioxid)» von außen nur unbefriedigend steuern lassen, somit zu nicht reproduzierbaren Ergebnissen führen.

Erfindungsgemäß können diese Schwierigkeiten durch eine (semi-)kontinuierliche Reaktionsführung beseitigt werden. Sie läßt sich in folgende Teilstufen untergliedern, die bei Wahl eines geeigneten Reaktors nahtlos ineinander übergehen, so daß eine vollkontinuierliche Reaktionsführung resultiert:

*Stufe 0:* eine Phosphorsäure-haltige wäßrige Suspension (2,5 < pH < 4) eines durch einen Batchprozeß oder auch gemäß diesem Verfahren hergestellten groben DCP-Dihydrats wird in einem Reaktor vorgelegt (30-60% Füllmenge).

*Stufe 1:* innerhalb einer vorgegebenen Zeit werden über Pumpen Phosphorsäure (40-85%ig) und eine Fällkreide-Suspension (20-40%ig) unter kräftigem Rühren so in den Reaktor dosiert, daß ein Überschäumen infolge der $CO_2$-Entwicklung vermieden wird, wobei ein Phosphorsäureüberschuß, d.h. ein pH-Wert der Suspension von 2,5-4 aufrechterhalten wird.

*Stufe 2:* nach beendeter Zugabe kann zur Komplettierung der Reaktion ($CO_2$-Abgabe) eine kurze Nachreaktionsphase (5-15 Min.) erfolgen.

*Stufe 3:* dem Reaktor wird so viel Kristallsuspension entnommen, um den Füllstand des Reaktors nach Stufe 0 wiederherzustellen (30-60% Füllmenge).

Anschließend kann der Reaktionscyclus der Stufen 1 bis 3 beliebig oft wiederholt werden, so daß eine semi-kontinuierliche Reaktionsführung erzielt wird. Die jeweils ausgeschleuste Kristallsuspension wird nach bekannten Methoden filtriert, gewaschen und getrocknet. Zur Trocknung hat sich ein Wirbelbett als besonders zweckmäßig erwiesen. Vorteilhaft läßt sich das Verfahren jedoch auch in einem kontinuierlich arbeitenden Mischer durchführen, in dem eine entsprechende Menge DCP-Dihydrat vorgelegt werden kann.

*Beispiel 1* (Vergleichsbeispiel)
In diesem Beispiel ist die Durchführung eines Batchprozesses beschrieben. Die Auswertung (Siebanalyse) mehrerer nach dieser Anleitung durchgeführten Versuche ist in Tabelle 1 zusammengefaßt.

Wie ersichtlich ist, treten von Charge zu Charge starke Schwankungen bezüglich Korngrößenverteilung auf. Der Korngrößenbereich > 250 µm ist nicht vorhanden.

In einem 1 m³-fassenden Mischer (Drehzahl der Rührwelle: 40 Upm) werden 225 kg einer 58,5%igen Phosphorsäure vorgelegt. Über eine Dosierpumpe werden unter lebhafter $CO_2$-Entwicklung innerhalb von 30 Minuten 220 kg einer 28%igen Fällkreide-Suspension (Schüttdichte der trockenen Fällkreide: 550 g/l) zugepumpt. Diese Menge entspricht etwa der ersten Neutralisationsstufe der Phosphorsäure (Monocalciumphosphatstufe). Die Reaktortemperatur steigt hierbei von 25° auf ca. 34°C an. Danach werden innerhalb von 50 Minuten weitere 220 kg der 28%igen Fällkreide-Suspension zugepumpt. Der pH-Wert der resultierenden DCP-Dihydrat-Suspension beträgt nach 5minütiger Nachreaktionsphase 3,2. Das Endprodukt wird filtriert, mit Wasser säurefrei gewaschen und getrocknet.

Nach Röntgenaufnahme und Analyse liegt DCP-Dihydrat vor.

## TABELLE 1

Versuchsauswertung (Siebanalyse) zu Beispiel 1

| Korngröße | Versuch 1 | Versuch 2 | Versuch 3 | Versuch 4 | Versuch 5 |
|---|---|---|---|---|---|
| > 250 µm | 0,0 | 0,0 | 0,0 | 0,0 | 0,0 |
| > 125 µm | 66,6 | 15,4 | 0,4 | 76,0 | 1,4 |
| > 90 µm | 29,0 | 58,4 | 25,8 | 19,6 | 23,8 |
| > 63 µm | 3,8 | 21,0 | 56,2 | 2,0 | 49,0 |
| > 63 µm | 0,6 | 5,2 | 17,6 | 2,4 | 25,8 |

*Beispiel 2* (gemäß der Erfindung)

In einem 1 m³-fassenden Mischreaktor werden 180 kg eines gemäß Beispiel 1 erhaltenen getrockneten Produkts in 430 kg Wasser angeschlämmt.

Mit konzentrierter Phosphorsäure wird auf einen pH-Wert von 3,5 eingestellt.

Innerhalb von 35 Minuten werden 58 kg einer 85-%igen Phosphorsäure und 209 kg der einer 23%igen Fällkreide-Suspension (Fällkreide wie in Beispiel 1) zudosiert. Anschließend wird der alte Füllstand (vor Beginn der Fällung) durch Ablassen der notwendigen Menge an DCP-Dihydrat wiederhergestellt, worauf die beschriebene Fällungsprozedur erneut beginnen kann.

Die Produkte zeigen nach Filtration, Waschung und Trocknung die in Tabelle 2 aufgeführten Siebaufrisse.

Gemäss Röntgenaufnahme und Analyse liegt DCP-Dihydrat vor. Das Produkt entspricht den Reinheitskriterien von USP XX.

Die in Tabelle 2 zusammengestellten Werte zeigen im Vergleich zu Tabelle 1, daß durch eine kontinuierliche Reaktionsführung reproduzierbar eine gleichmäßig ausgebildete Korngrößenverteilung erzielt werden kann. Im Verlauf mehrerer Zyklen erfolgt eine Verschiebung von anfangs feinerem Produkt zu den bevorzugten gröberen Strukturen.

## TABELLE 2

Versuchsauswertung (Siebanalyse) zu Beispiel 2

| Korngröße | Zyklus 0 (Batch) | Zyklus 1 | Zyklus 2 | Zyklus 3 | Zyklus 4 | Zyklus 5 | Zyklus 10 | Zyklus 20 | Zyklus 30 |
|---|---|---|---|---|---|---|---|---|---|
| > 355 µm | 0,0 | 0,0 | 0,0 | 2,2 | 2,1 | 6,3 | 4,0 | 2,4 | 7,6 |
| > 250 µm | 0,0 | 0,6 | 6,8 | 18,2 | 17,5 | 18,3 | 16,2 | 20,0 | 28,6 |
| > 125 µm | 77,6 | 89,6 | 86,6 | 65,4 | 49,4 | 52,8 | 53,7 | 57,0 | 49,8 |
| > 90 | 8,6 | 4,8 | 3,6 | 6,6 | 24,0 | 18,4 | 18,0 | 13,8 | 7,6 |
| > 63 µm | 7,2 | 3,0 | 1,8 | 3,6 | 5,8 | 3,0 | 6,2 | 4,4 | 3,4 |
| < 63 µm | 6,6 | 2,0 | 1,2 | 4,0 | 1,2 | 1,2 | 2,4 | 2,4 | 3,0 |

*Beispiel 3* (gemäß der Erfindung)

Das Beispiel beschreibt eine kontinuierliche Verfahrensvariante.

In einem 150 l fassenden horizontalen Mischer wird eine phosphorsaure (pH: 3,2) 35%ige DCP-Dihydratsuspension vorgelegt. Unter kräftigem Rühren wird eine 80%ige reine Phosphorsäure (Mengeneinstellung: 108 kg/h) und eine 24%ige Fällkreidesuspension (Mengeneinstellung: 347 kg/h; Schüttdichte der trockenen Fällkreide: 510 g/l) zudosiert. Die den Mischer am Überlauf mit 32°C verlassende Kristallsuspension wird filtriert, säurefrei gewaschen und getrocknet.

Im Abstand von 2, 3, 4 und 6 Stunden wird eine Siebanalyse dieses Produkts durchgeführt (Tab. 3). Gemäß Röntgenaufnahmen und Analyse liegt DCP-Dihydrat vor. Die Reinheitskriterien nach USP XX sind erfüllt.

TABELLE 3

Versuchsauswertung (Siebanalyse zu Beispiel 3)

|  | 2 Stunden | 3 Stunden | 4 Stunden | 6 Stunden |
|---|---|---|---|---|
| > 250 μm | 0,2 | 1,3 | 3,2 | 6,1 |
| > 125 μm | 79,6 | 76,2 | 71,9 | 70,2 |
| > 90 μm | 12,2 | 14,3 | 18,3 | 16,1 |
| > 63 μm | 3,4 | 3,7 | 3,5 | 5,2 |
| < 63 μm | 4,2 | 4,5 | 3,1 | 2,4 |

## Patentansprüche

1. (Semi-)kontinuierliches Verfahren zur Herstellung von grobkörnigem Dicalciumphosphat-Dihydrat mit nahezu sphärischer Kristallform in einem Korngrößenbereich zwischen 63 und 450 μm, bevorzugt zwischen 90 und 300 μm, durch Reaktion von reiner wäßriger Phosphorsäure mit wäßrigen Suspensionen von Fällkreiden, wobei man in einem geeigneten Mischorgan eine phosphorsaure DCP-Dihydrat-Suspension vorlegt (2,5 > pH > 4) und Calciumcarbonat-Suspension und Phosphorsäure gleichzeitig so zudosiert, daß ein pH-Bereich zwischen 2,5 und 4 und Temperaturen zwischen 10° und 60°C aufrechterhalten werden, wobei man kontinuierlich oder semi-kontinuierlich eine dem gebildeten Reaktionsprodukt entsprechende Menge der Suspension entnimmt und in bekannter Weise das DCP-Dihydrat abtrennt, wäscht und trocknet, dadurch gekennzeichnet, daß die verwendeten Fällkreiden Schüttdichten zwischen 400 und 700 g/l aufweisen.

2. Verfahren nach Anspruch 1, dadurch gekennzeichnet, daß Temperaturen von 20-45°C aufrechterhalten werden, wobei gegebenenfalls zusätzlich gekühlt wird.

3. Verfahren nach Anspruch 1 und 2, dadurch gekennzeichnet, daß die Reaktion so durchgeführt wird, daß die Kristallsuspension einen Feststoffgehalt zwischen 20 und 40 Gew.-% Dicalciumphosphat-Dihydrat aufweist.

4. Verfahren nach Anspruch 3, dadurch gekennzeichnet, daß die Phosphorsäure in einer Konzentration von 40-85% und die Kreidesuspension in einer Konzentration von 20-40% zugefügt wird.

5. Verfahren nach Anspruch 1 bis 4, dadurch gekennzeichnet, daß die Fällkreiden Schüttdichten zwischen 500 und 600 g/l aufweisen.

6. Verfahren nach Anspruch 1 bis 5, dadurch gekennzeichnet, daß die Fällungsreaktion in einem Reaktor mit großem Oberfläche/Volumen-Verhältnis, vorzugsweise in einem horizontalen Mischreaktor, durchgeführt wird.

7. Verfahren nach Anspruch 1 bis 6, dadurch gekennzeichnet, daß bei semi-kontinuierlicher Verfahrensführung 30-60% der Reaktorfüllung vorgelegt werden.

## Claims

1. Continuous process for the production of coarse-grained dicalcium phosphate dihydrate with almost spherical crystal form in a grain size range between 63 and 450 μm, preferably between 90 and 300 μm, by reaction of pure aqueous phosphoric acid with aqueous suspensions of precipitated chalk, whereby one places a phosphoric acid DCP dihydrate suspension in a suitable mixing apparatus (2.5 > pH > 4) and simultaneously doses in calcium carbonate suspension and phosphoric acid so that a pH range between 2.5 and 4 and a temperature between 10° and 60°C are maintained, whereby one continuously or semi-continuously removes an amount of the suspension corresponding to the reaction product formed and, in known manner, separates off, washes and dries the DCP dihydrate, characterised in that the precipitated chalk used has a bulk density between 400 and 700 g/l.

2. Process according to claim 1, characterised in that temperatures of 20-45°C are maintained, whereby it is possibly additionally cooled.

3. Process according to claim 1 and 2, characterised in that the reaction is so carried out that the crystal suspension has a solids content between 20 and 40 wt.% of dicalcium phosphate dihydrate.

4. Process according to claim 3, characterised in that the phosphoric acid is added thereto in a concentration of 40-85% and the chalk suspension in a concentration of 20-40%.

5. Process according to claim 1 to 4, characterised in that the precipitated chalk has a bulk density between 500 and 500 g/l.

6. Process according to claim 1 to 5, characterised in that the precipitation reaction is carried out in a reactor with large surface/volume ratio, preferably in a horizontal mixer reactor.

7. Process according to claim 1 to 6, characterised in that, in the case of semi-continuous carrying out of the reaction, 30-60% of the reactor filling are initially taken.

## Revendications

1. Procédé (semi-)continu de préparation de phosphate dicalcique dihydraté à grains grossiers présentant une forme cristalline quasiment sphérique dans une gamme de dimensions granulaires comprise entre 63 et 450 μm, de préférence entre 90 et 300 μm, par réaction d'une solution aqueuse d'acide phosphorique pur avec des suspensions aqueuses de craies de précipitation, procédé dans lequel on introduit dans un organe mélangeur approprié une suspension de dihydrate de DCP dans de l'acide phosphorique (2,5 > pH > 4) et on dose simultanément une suspension de carbonate de calcium et de l'acide phosphorique de façon qu'une gamme de pH comprise entre 2,5 et 4 et des températures comprises entre 10 et 60°C soient maintenues, on prélève de manière continue ou semi-continue une quantité de la suspension, correspondant au produit réactionnel formé, et, d'une manière connue, on isole, lave et sèche le dihydrate de DCP, caractérisé en ce que les craies de précipitation utilisées présentent des densités en vrac comprises entre 400 et 700 g/l.

2. Procédé suivant la revendication 1, caractérisé en ce que des températures de 20 à 45°C sont maintenues, éventuellement en refroidissant en supplément.

3. Procédé suivant l'une des revendications 1 et 2, caractérisé en ce que la réaction est effectuée de façon que la suspension cristalline présente une teneur en matière solide comprise entre 20 et 40% en poids de phosphate dicalcique dihydraté.

4. Procédé suivant la revendication 3, caractérisé en ce que l'acide phosphorique est ajouté en une concentration de 40 à 85% et la suspension de craie en une concentration de 20 à 40%.

5. Procédé suivant l'une des revendications 1 à 4, caractérisé en ce que les craies de précipitation présentent des densités en vrac comprises entre 500 et 600 g/l.

6. Procédé suivant l'une des revendications 1 à 5, caractérisé en ce que la réaction de précipitation est effectuée dans un réacteur ayant un grand rapport surface/volume, de préférence dans un réacteur de mélange horizontal.

7. Procédé suivant l'une des revendications 1 à 6, caractérisé en ce que 30 à 60% du remplissage du réacteur sont introduits préalablement lors d'une opération semi-continue.